Europäisches Patentamt

European Patent Office

Office européen des brevets

(11) Veröffentlichungsnummer: **0 282 790**
**A2**

## (12) EUROPÄISCHE PATENTANMELDUNG

(21) Anmeldenummer: 88102869.0

(22) Anmeldetag: 26.02.88

(51) Int. Cl.⁴: **F03D 1/06**

(30) Priorität: 10.03.87 DE 3707583

(43) Veröffentlichungstag der Anmeldung:
21.09.88 Patentblatt 88/38

(84) Benannte Vertragsstaaten:
DE FR GB NL

(71) Anmelder: Bilgery, Adolf
Brückenstrasse-Fabrik
D-6306 Langgöns-Oberkleen(DE)

(72) Erfinder: Bilgery, Adolf
Brückenstrasse-Fabrik
D-6306 Langgöns-Oberkleen(DE)

(74) Vertreter: Schlagwein, Udo, Dipl.-Ing.
Anwaltsbüro Ruppert & Schlagwein
Frankfurter Strasse 34
D-6350 Bad Nauheim(DE)

(54) Flügelrad.

(57) Bei einem axial angeströmten Flügelrad (4) ist auf jeder Seite einer Drehachse (3) als Flügel eine elliptische Halbfläche (5, 6) derart angeordnet, daß die eine Halbfläche (5) schräg nach vorn und die andere Halbfläche (6) schräg nach hinten verläuft. Die Halbflächen kreuzen sich mit ihren bei einer Vollfläche die Trennlinie (8) bildenden Kanten auf der Drehachse (3).

Durch diese Gestaltung wird die gesamte Flug-kreisfläche des Flügelrades (4) zur Umsetzung von Strömungsenergie in Drehenergie genutzt.

Fig. 2

## Flügelrad

Die Erfindung bezieht sich auf ein Flügelrad mit zwei schräg zu seiner Drehachse ausgerichteten Flügeln. Solche Flügelräder sind zum Beispiel bei Windkraftanlagen gebräuchlich und daher bekannt.

Die bekannten Flügelräder sind meist wie Luftschrauben von Flugzeugen ausgebildet, weisen jedoch gegenüber letzteren einen wesentlich größeren Durchmesser auf. Die wohl größte Windkraftanlage der Welt, die Growian, hat beispielsweise einen Windraddurchmesser von 100 Metern. Tatsächlich hat die Anlage die erhoffte Leistung bei weitem nicht erbracht, weil die Windradflügel dem Wind gegenüber eine zu geringe Flügelfläche aufweisen und deshalb dem Wind gegenüber zu wenig Widerstand entgegensetzen.

Auch die Windkraftanlage Ebeltoft in Dänemark, deren Windräder drei Propellerflügel haben, erbringt nur 10 - 20 % der erhofften Leistung. Auch hier dürfte die Ursache darin liegen, daß bei der Konzeption des Luftrades ebenfalls von Flugzeugpropellern ausgegangen wurde.

Der Erfindung liegt die Aufgabe zugrunde, ein Flügelrad der eingangs genannten Art derart zu gestalten, daß es mit relativ geringen Strömungsgeschwindigkeiten wirkungsvoll zu arbeiten vermag und deshalb insbesondere als Windrad geeignet ist.

Diese Aufgabe wird erfindungsgemäß dadurch gelöst, daß die Flügel zwei ebene, zu beiden Seiten der Drehachse angeordnete Halbflächen einer gedachten, quer zur Drehachse angeordneten Scheibe sind, wobei die Trennlinie der Scheibe durch die Drehachse führt und die Halbflächen aus der gedachten Scheibe heraus um eine gemeinsame, quer durch die Drehachse führende Achse quer zur Ebene der Scheibe in entgegengesetzte Richtungen gekippt verlaufen.

Ein solches Flügelrad ist von seiner Funktionsweise her eher mit einem Segel als mit einer Luftschraube eines Flugzeuges zu vergleichen. Bei dem erfindungsgemäßen Flügelrad wird die gesamte Flugkreisfläche des Flügelrades für die Umwandlung von Strömungsenergie in Drehbewegung bzw. bei Verwendung als Propeller für die Erzeugung von Strömungsenergie aus einer Drehbewegung genutzt. Da die Halbflächen geneigt sind, ist ihre tatsächlich nutzbare Fläche sogar größer als die Flugkreisfläche, bei einem Neigungswinkel von 45 Grad etwa 1,4 mal so groß.

Das erfindungsgemäße Flügelrad eignet sich insbesondere für Windkraftanlagen. Es kann jedoch auch in Windkanälen zur Erzeugung der Windströmung, als Windmesser, Schiffsschraube, Wasserturbine oder Segelschiffsantrieb eingesetzt werden.

Grundsätzlich könnten die Halbflächen beliebige Form haben. Strömungsmäßig besonders günstig ist es jedoch, wenn die Halbflächen halbkreisähnlich sind.

Mit relativ kleinen Flugkreisdurchmessern lassen sich maximal große Halbflächen erzielen, wenn gemäß einer vorteilhaften Ausgestaltung der Erfindung die Halbflächen elliptisch und so weit aus der Ebene der gedachten Scheibe gekippt sind, daß in Richtung der Drehachse eine kreisförmige Projektionsfläche entsteht.

Für die Verwendung als Windkraftanlage bei Anströmung von vorn ist es vorteilhaft, wenn die Ebenen der Halbflächen jeweils im Winkel von 45 Grad zur Drehachse verlaufen und die Halbflächen sich somit an gegenüberliegenden Seiten der Drehachse in einem Winkel von 90 Grad kreuzen.

Insbesondere bei Windkraftanlagen ist eine einfache Anpassung an unterschiedliche Windstärken leicht möglich, wenn die Neigung der Halbflächen relativ zur Drehachse verstellbar ausgebildet ist.

Eine für übliche Anwendungen ausreichende Verstellmöglichkeit ist gegeben, wenn die eine Halbfläche relativ zur Drehachse in bezug auf die gedachte, normal zur Drehachse ausgerichtete Scheibe von 0 bis 45 Grad vorwärts verstellbar und die andere Halbfläche entsprechend von 0 bis 45 Grad rückwärts verstellbar angeordnet ist. Verwendet man ein solches verstellbares Flügelrad beispielsweise als Propeller für ein Motorboot, so kann man bei gleicher Propellerdrehzahl die Fahrgeschwindigkeit des Motorbootes verändern. Sogar Rückwärtsfahrt ist durch eine solche Verstellung möglich.

Auch Flügelräder mit großflächigen Flügeln können mit geringem Aufwand eine große Festigkeit erhalten, wenn von den beiden Ecken jeder kreisartigen Halbfläche fluchtend mit der jeweiligen Halbfläche jeweils eine Spannleine zur Peripherie der anderen Halbfläche führt.

Das Flügelrad kann bei relativ geringem Gewicht eine große nutzbare Fläche aufweisen, wenn gemäß einer anderen Ausgestaltung der Erfindung die Halbflächen jeweils einen äußeren Rahmen und eine diesen ausfüllende Bespannung aufweisen.

Die Erfindung läßt zahlreiche Ausführungsformen zu. Zur weiteren Verdeutlichung ihres Grundprinzips ist eine davon in der Zeichnung dargestellt und wird nachfolgend beschrieben. In ihr zeigen die

Fig. 1 eine perspektivische Darstellung einer Windkraftanlage mit dem erfindungsgemäßen Flügelrad,

Fig. 2 eine Ansicht von vorn auf das Flügelrad,

Fig. 3 eine Seitenansicht des Flügelrades,

Fig. 4 eine perspektivische Darstellung einer weiteren Ausführungsform eines Flügelrades.

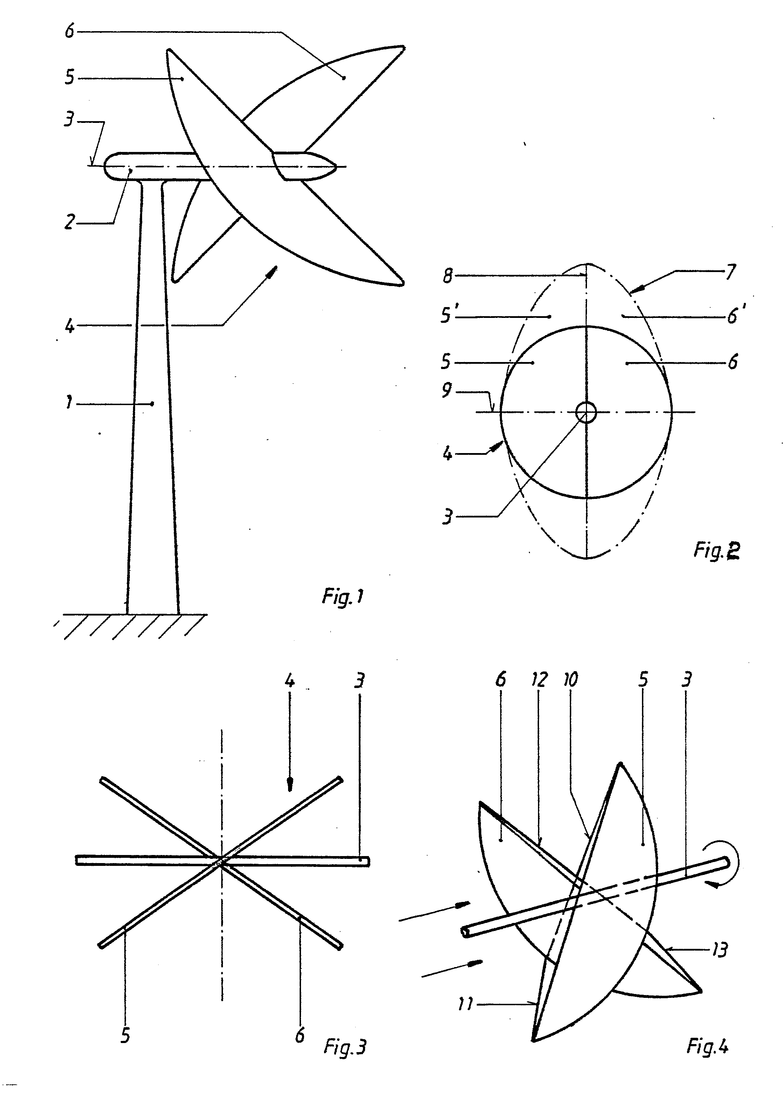

Die Figur 1 zeigt einen senkrecht stehenden Mast 1, welcher an seinem oberen Ende einen horizontal ausgerichteten Arm 2 hat, der ein um eine horizontale Drehachse 3 drehbares Flügelrad 4 trägt. Dieses Flügelrad hat als Flügel zwei Halbflächen 5, 6, deren genaue Gestaltung und Ausrichtung den Figuren 2 und 3 zu entnehmen ist.

Die Figur 2 zeigt von vorn die Drehachse 3, auf der strichpunktiert eine gedachte, elliptische Scheibe 7 dargestellt ist. Diese gedachte Scheibe 7 ist durch eine Trennlinie 8 in zwei gedachte Halbflächen 5', 6' geteilt. Kippt man die gedachte Halbfläche 5 um eine horizontale Achse 9 um beispielsweise 45 Grad nach vorn und die andere Halbfläche 6' entsprechend um die Achse 9 nach hinten, so ergibt sich die tatsächliche Lage der Halbflächen 5, 6 in Vorderansicht.

Die Figur 3 verdeutlicht die Gestaltung des Flügelrades 4. Zu sehen ist die Drehachse 3, vor der unter einem Winkel von 45 Grad die Halbfläche 5 und hinter der ebenfalls unter einem Winkel von 45 Grad, jedoch in entgegengesetzte Richtung, die Halbfläche 6 verläuft. Wird dieses Flügelrad 4 in Figur 3 gesehen von rechts angeströmt, so dreht es sich durch den schrägen Verlauf der Halbflächen 5, 6 im Uhrzeigersinn.

Bei der Ausführungsform gemäß Figur 4 sind genau wie bei der zuvor beschriebenen zu beiden Seiten der Drehachse 3 die Halbflächen 5, 6 angeordnet. Von den Ecken der Halbfläche 5 führen Spannseile 10, 11 zu einer Stelle auf der Peripherie der anderen Halbfläche 6, welche genau auf der Bogenmitte liegt. Ebenso führen von den Ecken der Halbfläche 6 Spannseile 12, 13 zur Peripherie der Halbfläche 5. Diese Spannseile 10 - 13 brauchen ihre Länge nicht zu verändern, wenn die Halbflächen 5, 6 in ihrer Neigung verstellt werden.

## Ansprüche

1. Flügelrad mit zwei schräg zu seiner Drehachse ausgerichteten Flügeln, dadurch gekennzeichnet, daß die Flügel zwei ebene, zu beiden Seiten der Drehachse (3) angeordnete Halbflächen (5, 6) einer gedachten, quer zur Drehachse (3) angeordneten Scheibe (7) sind, wobei die Trennlinie (8) der Scheibe (7) durch die Drehachse (3) führt und die Halbflächen (5, 6) aus der gedachten Scheibe (7) heraus um eine gemeinsame, quer durch die Drehachse (3) führende Achse (9) quer zur Ebene der Scheibe (7) in entgegengesetzte Richtungen gekippt verlaufen.

2. Flügelrad nach Anspruch 1, dadurch gekennzeichnet, daß die Halbflächen (5, 6) halbkreisähnlich sind.

3. Flügelrad nach den Ansprüchen 1 oder 2, dadurch gekennzeichnet, daß die Halbflächen (5, 6) elliptisch und so weit aus der Ebene der gedachten Scheibe (7) gekippt sind, daß in Richtung der Drehachse (3) eine kreisförmige Projektionsfläche entsteht.

4. Flügelrad nach zumindest einem der vorangehenden Ansprüche, dadurch gekennzeichnet, daß die Ebenen der Halbflächen (5, 6) jeweils im Winkel von 45 Grad zur Drehachse (3) verlaufen und die Halbflächen (5, 6) sich somit an gegenüberliegenden Seiten der Drehachse (3) in einem Winkel von 90 Grad kreuzen.

5. Flügelrad nach zumindest einem der vorangehenden Ansprüche, dadurch gekennzeichnet, daß die Neigung der Halbflächen (5, 6) relativ zur Drehachse (3) verstellbar ausgebildet ist.

6. Flügelrad nach Anspruch 5, dadurch gekennzeichnet, daß die eine Halbfläche (5) relativ zur Drehachse (3) in bezug auf die gedachte, normal zur Drehachse (3) ausgerichtete Scheibe (7) von 0 bis 45 Grad vorwärts verstellbar und die andere Halbfläche (6) entsprechend von 0 bis 45 Grad rückwärts verstellbar angeordnet ist.

7. Flügelrad nach zumindest einem der vorangehenden Ansprüche, dadurch gekennzeichnet, daß von den beiden Ecken jeder kreisartigen Halbfläche (5, 6) fluchtend mit der jeweiligen Halbfläche (5, 6) jeweils ein Spannseil (10 - 13) zur Peripherie der anderen Halbfläche (5, 6) führt.

8. Flügelrad nach zumindest einem der vorangehenden Ansprüche, dadurch gekennzeichnet, daß die Halbflächen (5, 6) jeweils einen äußeren Rahmen und eine diesen ausfüllende Bespannung aufweisen.

Fig. 1

Fig. 2

Fig. 3

Fig. 4